# FASCICULE DE BREVET EUROPEEN

(11) **EP 0 822 507 B1**
(45) Date de publication et mention de la délivrance du brevet: **05.11.2003**
(21) Numéro de dépôt: 97401828.5
(22) Date de dépôt: 30.07.1997
(51) Int. Cl.: G06K 7/06

(54) **Détecteur de support plat et connecteur comportant un tel détecteur**
Trägerplattedetektor und Verbinder mit solch einem Detektor
Support plate detector and connector having such a detector

(30) Priorité: 01.08.1996 FR 9609735
(43) Date de publication de la demande: 04.02.1998
(73) Titulaire: FCI, 75009 Paris (FR)
(72) Inventeur: Bernardet Jean Baptiste, 25300 Pontarlier (FR); Duffet, Guy, . (FR)
(74) Mandataire: Keib, Gérard

(56) Documents cités:
- EP-A- 0 316 699
- EP-A- 0 542 231
- EP-A- 0 660 253
- EP-A- 0 669 590
- FR-A- 2 578 072

## Description

La présente invention concerne un détecteur de présence ou de fin de course d'un support plat ainsi qu'un connecteur, tel qu'un cadre de lecture d'une carte magnétique, équipé d'un tel détecteur.

Il est connu d'équiper des connecteurs pour un support plat de détecteur de présence ou de fin de course du support plat. Ce type de détection est nécessaire pour positionner précisément les plages de contact du support plat, tel qu'une carte magnétique, en connexion avec les contacts du connecteur.

On connaît par exemple dans le document FR 2 714 534 (EP-A-0 660 253) au nom de la demanderesse un connecteur comportant une paire de contacts fin de course sur une même bande porteuse.

Dans cette réalisation, le support plat est adapté à déplacer l'une des lames vers l'autre lame du détecteur au fur et à mesure de son avancement sur le connecteur, la fin de course du support plat étant obtenue lorsque les lames sont en contact mécanique et électrique.

Lors du retrait du support plat, les lames sont rappelées élastiquement dans leur position initiale, éloignées l'une de l'autre. Cependant, la distance séparant ces deux lames est peu précise, notamment lorsque la force de rappel élastique se modifie après de multiples utilisations. Ceci entraîne automatiquement une incertitude sur la course que doit parcourir le support plat pour réaliser le contact de ces deux lames. Le positionnement du support plat par rapport aux contacteurs du connecteur est ainsi imparfait.

La présente invention a pour but de résoudre les inconvénients précités et de proposer un détecteur d'un support plat qui permette un positionnement précis de ce support plat dans un connecteur.

Le détecteur d'un support plat, tel qu'une carte électronique, selon l'invention comprend deux lames de contact s'étendant respectivement suivant deux axes longitudinaux parallèles l'un à l'autre, une première desdites lames ayant un prolongement adapté à être en regard de la seconde lame, lesdites lames étant logées dans un boîtier, le support plat étant adapté à être déplacé parallèlement à une face du boîtier et ledit prolongement formant saillie sur cette face de sorte que le support plat est adapté à déplacer le prolongement entre ladite position en saillie et une position enfoncée dans laquelle le prolongement est en contact avec ladite seconde lame, caractérisé en ce que chaque lame de contact est une lame recourbée ayant deux branches s'étendant en regard l'une de l'autre, et en ce que le boîtier est adapté à maintenir lesdites branches comprimées entre des parois dudit boîtier.

Ainsi, grâce à la forme recourbée des lames, mises en précontrainte entre les parois d'un boîtier, un écartement précis entre les lames de contact peut être obtenu.

Selon une version avantageuse de l'invention, chaque lame comprend une première branche s'étendant dans un plan et une seconde branche rappelée élastiquement à une distance de cette première branche, inférieure à la distance séparant les parois du boîtier maintenant les branches comprimées.

Lors du positionnement des lames dans le boîtier, celles-ci sont automatiquement comprimées et mises en précontrainte.

Selon une version préférée de l'invention, au moins une butée est disposée en saillie de la face du boîtier, directement en aval du prolongement de la première lame.

Ainsi le détecteur conforme à l'invention permet de repérer exactement la fin de course du support plat.

Selon un autre aspect de l'invention, un connecteur d'un support plat, tel que cartes électroniques, comprend des contacteurs disposés dans un plan et adaptés à être en contact avec le support plat introduit suivant une direction F.

Selon l'invention, ce connecteur comprend un détecteur tel que décrit ci-dessus disposé en aval des contacteurs par rapport à ladite direction F.

D'autres avantages et particularités de l'invention apparaîtront encore dans la description ci-après.

Aux dessins annexés, donnés à titre d'exemples non limitatifs:
- la figure 1 est une vue en perspective des lames recourbées du détecteur conforme à l'invention;
- les figures 2A et 2B sont des vues en coupe du boîtier logeant les lames recourbées de la figure 1;
- la figure 3 est une vue de dessus d'un connecteur conforme à l'invention;
- la figure 4 est une vue de côté du connecteur de la figure 3; et
- la figure 5 est une vue de côté partiellement en coupe illustrant le positionnement d'un support plat sur un connecteur conforme à l'invention.

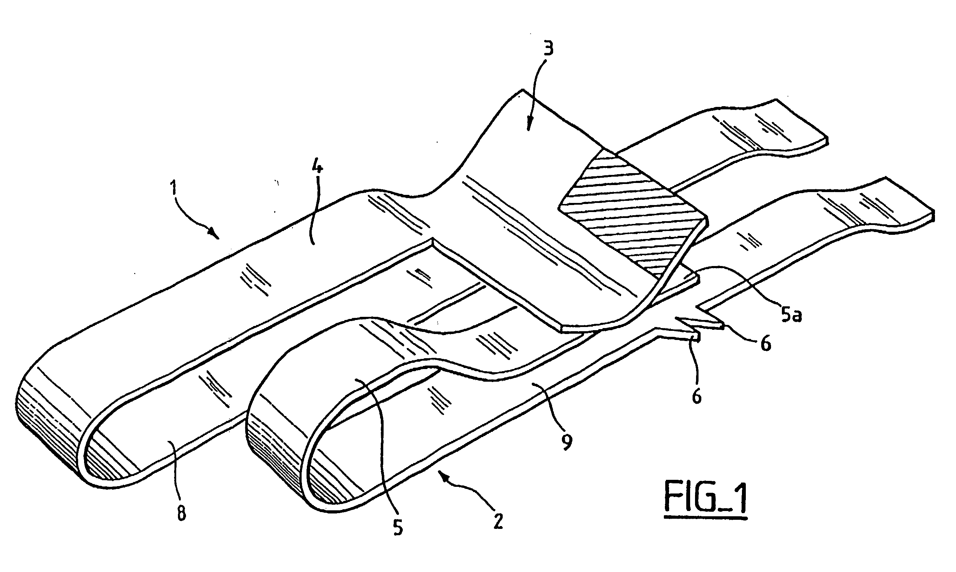

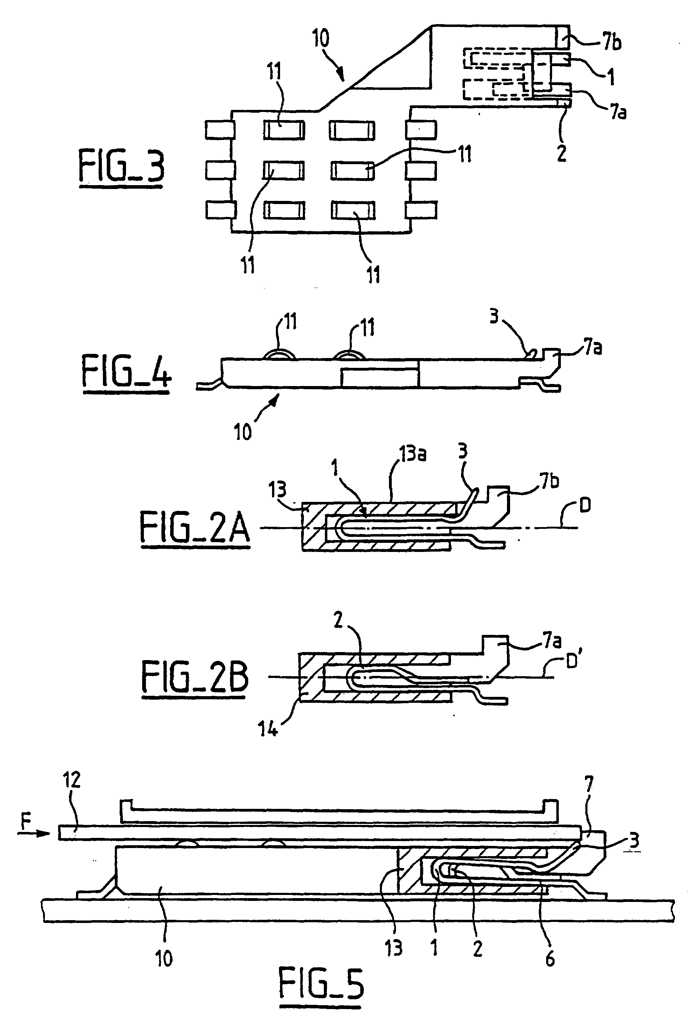

Comme illustré tout d'abord à la figure 1, un détecteur de support plat, tel qu'une carte électronique, comprend deux lames de contact 1, 2, s'étendant respectivement sur deux axes D, D', longitudinaux ou parallèles l'un à l'autre comme illustrés en figures 2A et 2B.

Chaque lame de contact 1, 2, est une lame recourbée ayant deux branches 4, 5, 8, 9 s'étendant en regard l'une de l'autre. Chaque lame 1, 2 comprend une première branche 8, 9 s'étendant dans un plan et une seconde branche 4, 5 disposée au-dessus de cette première branche, à une certaine distance.

Dans cet exemple de réalisation, la première lame 1 comprend deux branches 8, 4, sensiblement parallèles l'une à l'autre, la seconde branche 4 se terminant par un prolongement 3 adapté à être regard de la seconde lame 2.

Ce prolongement est constitué d'une patte incurvée, la face bombée de cette patte étant disposée en regard de la seconde lame 2.

La seconde lame 2, comprend une seconde branche 5 incurvée ayant une portion adjacente à la première branche 9, disposée à une distance de cette première branche 9 supérieure à la distance séparant l'extrémité 5a de cette seconde branche 5 et la première branche 9.

Comme illustré aux figures 2A et 2B, ces lames 1, 2 sont logées dans un boîtier 13, 14 adapté à maintenir les branches 4, 5, 8, 9 comprimées entre les parois de ce boîtier 13, 14.

A la figure 2A, la lame 1 a ses deux branches 4, 8, en contact avec les parois intérieures du boîtier 13.

A la figure 2B, la lame 2 est en contact avec les parois intérieures du boîtier 14, à la fois par sa première branche 9 et par la portion de la seconde branche 5 adjacente à la première branche 9. Ainsi l'extrémité 5a de la seconde branche est disposée à proximité de la première branche 9.

De préférence, chaque lame 1, 2 est logée dans un boîtier séparé 13, 14. Lorsque les lames 1, 2 sont positionnées dans le boîtier 13, 14, les premières branches 8 et 9 sont placées dans un même plan, l'extrémité 5a de la seconde branche 5 de la seconde lame 2 étant disposée sous le prolongement 3 en saillie de la première lame 1.

Ce prolongement 3 de la première lame forme une saillie sur une face 13a du boîtier 13, de sorte que lorsque un support plat est adapté à être déplacé parallèlement à cette face 13a du boîtier 13, ce support plat déplace le prolongement 3 entre sa position en saillie et une position enfoncée dans laquelle ce prolongement 3 est en contact avec la seconde lame 2. Ce mécanisme est clairement illustré à la figure 5 dans laquelle le support plat 12 déplace le prolongement 3 vers le bas, de sorte que la face bombée de ce prolongement vienne en contact au point c avec l'extrémité 5a de la seconde lame 2.

La distance séparant ainsi l'extrémité 5a de la seconde lame de la face bombée du prolongement 3, lorsque les lames 1, 2 sont comprimées dans le boîtier 13, 14, est sensiblement égale à la hauteur de la partie formant saillie du prolongement 3 au-dessus de la face 13a du boîtier 13.

Comme illustré à la figure 1, chaque première branche 8, 9, comprend de préférence des dents 6 s'étendant dans le plan de ces premières branches 8, 9 et adaptée à venir en prise avec des parois du boîtier 13, .14. De préférence, ces dents 6 sont prévues pour créer une fixation des lames 1, 2 à l'intérieur du boîtier 13, 14, tel un harpon. Les dents 6 ont ainsi une forme de triangle dont la pointe est dirigée vers l'extrémité des branches 9, 8, de sorte que ces dents 6 s'escamotent légèrement lors de l'introduction des lames 1, 2 dans le boîtier 13, 14 et s'opposent au retrait de ces lames une fois en place.

Au moins une butée est disposée en saillie de la face 13a du boîtier 13, 14, directement en aval du prolongement 3 de la première lame 1. Dans cet exemple, deux butées 7a, 7b, sont disposées de chaque côté du prolongement 3. Ainsi, lorsque le support plat est introduit sur la face 13a du boîtier 13, 14, le prolongement 3 s'efface entre les butées 7a et 7b sur lesquelles vient prendre appui le support plat 12.

Comme illustré aux figures 3 et 5, ce détecteur est adapté à équiper un connecteur pour support plat, tel qu'une carte électronique 12. Ce connecteur peut être par exemple un cadre de lecture comportant des contacts balais 11, disposés dans un plan et adaptés à venir en contact avec le support plat 12, sur des plages de contact prévues à cet effet.

Comme illustré à la figure 5, ce détecteur est disposé en aval des contacteurs 11 par rapport à la direction F d'introduction du support plat 12 sur le connecteur 10.

Bien entendu, de nombreuses modifications pourraient être apportées à l'exemple décrit ci-dessus sans sortir du cadre de l'invention.

Ainsi, les lames 1, 2 pourraient être logées dans un boîtier unique.

## Revendications

1. Détecteur d'un support plat (12), tel qu'une carte électronique, comprenant deux lames de contact (1, 2), s'étendant respectivement suivant deux axes (D, D') longitudinaux parallèles l'un à l'autre, une première desdites lames (1) ayant un prolongement (3) adapté à être en regard de la seconde lame (2), lesdites lames étant logées dans un boîtier (13, 14), le support plat (12) étant adapté à être déplacé parallèlement à une face (13a) du boîtier et ledit prolongement (3) formant saillie sur cette face (13a) de sorte que le support plat est adapté à déplacer le prolongement (3) entre ladite position en saillie et une position enfoncée dans laquelle le prolongement (3) est en contact avec ladite seconde lame (2), **caractérisé en ce que** chaque lame de contact (1, 2) est une lame recourbée ayant deux branches (4, 5, 8, 9) s'étendant en regard l'une de l'autre et **en ce que** le boîtier est adapté à maintenir lesdites branches (4, 5, 8, 9) comprimées entre des parois dudit boîtier (13, 14).

2. Détecteur conforme à la revendication 1, **caractérisé en ce que** chaque lame (1, 2) comprend une première branche (8, 9) s'étendant dans un plan et une seconde branche (4, 5) rappelée élastiquement à une distance de ladite première branche inférieure à la distance séparant les parois du boîtier (13, 14) maintenant lesdites branches (4, 5, 8,9) comprimées.

3. Détecteur conforme à l'une des revendications 1 ou 2, **caractérisé en ce que** le prolongement (3) est constituée d'une patte incurvée, la face bombée de ladite patte étant disposée en regard de la seconde lame (2).

4. Détecteur conforme à l'une des revendications 1 à 3, **caractérisé en ce que** la seconde lame comprend une seconde branche (5) incurvée ayant une portion adjacente à la première branche (9) de la seconde lame, cette portion étant disposée à une distance de ladite première branche (9) de la seconde lame supérieure à la distance séparant l'extrémité (5a) de la seconde branche (5) et la première branche (9), de la seconde lame.

5. Détecteur conforme à l'une des revendications 1 à 4, **caractérisé en ce que** chaque lame (1, 2) est logée dans un boîtier séparé (13, 14).

6. Détecteur conforme à la revendication 2, **caractérisé en ce que** chaque première branche (8, 9) comprend des dents (6) s'étendant dans le plan desdites premières branches (8, 9) et adaptées à venir en prise avec des parois du boîtier (13, 14).

7. Détecteur conforme à l'une des revendications 1 à 6, **caractérisé en ce qu'**au moins une butée (7a, 7b) est disposée en saillie de ladite face (13a) du boîtier (13, 14), directement en aval du prolongement (3) de la première lame (1).

8. Détecteur conforme à la revendication 7, **caractérisé en ce que** des butées (7a, 7b) sont disposées' de chaque côté dudit prolongement (3).

9. Connecteur pour support plat, tel que carte électronique, comprenant des contacteurs (11) disposés dans un plan et adaptés à venir en contact avec le support plat (12) introduit suivant une direction F, **caractérisé en ce que** le connecteur comprend un détecteur conforme à l'une des revendications 1 à 8, disposé en aval des contacteurs (11) par rapport à ladite direction F.

## Patentansprüche

1. Detektor eines ebenen Trägers (12), beispielsweise einer elektronischen Karte, der zwei Kontaktlamellen (1, 2) aufweist, die sich entlang zweier Längsachsen (D, D') parallel zueinander erstrecken, wobei eine der Lamellen eine Verlängerung (3) aufweist, die gegenüber der zweiten Lamelle (2) liegt, wobei die Lamellen in einem Gehäuse (13, 14) angeordnet sind, wobei der ebene Träger (12) parallel zu einer Seite (13a) des Gehäuses verschiebbar ist, und die Verlängerung über diese Seite (13a) so übersteht, dass der ebene Träger die Verlängerung (3) zwischen einer überstehenden Position und einer versenkten Position verschiebt, in der die Verlängerung (3) in Kontakt mit der zweiten Lamelle (2) ist,
**dadurch gekennzeichnet, dass**
jede Kontaktlamelle (1,2) eine umgebogene Lamelle mit zwei Schenkeln (4, 5, 8, 9) ist, die sich jeweils gegenüberliegen, und dass das Gehäuse die Seiten (4, 5, 8, 9) zwischen den Wänden des Gehäuses (13, 14) komprimiert hält.

2. Detektor nach Anspruch 1, **dadurch gekennzeichnet, dass** jede Lamelle einen ersten Schenkel (8, 9), der sich in einer Ebene erstreckt, und einen zweiten Schenkel (4, 5) aufweist, der elastisch in einem Abstand zum ersten Schenkel umgebogen ist, der geringer ist als der Abstand, der die Wände des Gehäuses (13, 14) trennt, die die komprimierten Schenkel (4, 5, 8, 9) halten.

3. Detektor nach Anspruch 1 oder 2, **dadurch gekennzeichnet, dass** die Verlängerung (3) aus einem nach innen gebogenen Steg besteht, wobei die bauchige Seite dieses Steges gegenüber der zweiten Lamelle (2) angeordnet ist.

4. Detektor nach einem der Ansprüche 1 bis 3, **dadurch gekennzeichnet, dass** die zweite Lamelle einen zweiten nach innen gebogenen Schenkel (5) aufweist, der einen Bereich in der Nähe des ersten Schenkels (9) der zweiten Lamelle hat, wobei dieser Bereich in einem Abstand zum ersten Schenkel (9) der zweiten Lamelle angeordnet ist, der größer ist als der Abstand, der das Ende (5a) des zweiten Schenkels (5) von dem ersten Schenkel (9) der zweiten Lamelle trennt.

5. Detektor nach einem der Ansprüche 1 bis 4, **dadurch gekennzeichnet, dass** jede Lamelle (1, 2) in einem getrennten Gehäuse (13, 14) angeordnet ist.

6. Detektor nach Anspruch 2, **dadurch gekennzeichnet, dass** jeder erste Schenkel (8, 9) Zähne (6) aufweist, die sich in der Ebene der ersten Schenkel (8, 9) erstrecken und mit den Wänden des Gehäuses (13, 14) in Eingriff kommen.

7. Detektor nach einem der Ansprüche 1 bis 6, **dadurch gekennzeichnet, dass** zumindest ein Anschlag (7a, 7b) direkt hinter der Verlängerung (3) der ersten Lamelle (1) angeordnet ist und über die Seite (13a) des Gehäuses (13, 14) übersteht.

8. Detektor nach Anspruch 7, **dadurch gekennzeichnet, dass** die Anschläge (7a, 7b) auf jeder Seite der Verlängerung (3) vorgesehen sind.

9. Steckverbinder für einen ebenen Träger wie beispielsweise eine elektronische Karte, der Kontaktelemente (11) aufweist, die in einer Ebene angeordnet sind und den ebenen Träger (12) kontaktieren können, der in eine Richtung F eingeführt wird, **dadurch gekennzeichnet, dass** der Steckverbinder einen Detektor nach einem der Ansprüche 1 bis 8 aufweist, der relativ zur Richtung F hinter den Kontaktelementen (11) angeordnet ist.

## Claims

1. Detector for detecting a flat support (12), such as an electronic card, comprising two contact blades (1, 2) lying respectively on two longitudinal axes (D, D') parallel to each other, the first (1) of the said blades having an extension (3) designed to be opposite the second blade (2), the said blades being housed in a casing (13, 14), the flat support (12) being designed to be moved parallel to a face (13a) of the casing and the said extension (3) forming a projection on this face (13a) so that the flat support is suitable for moving the extension (3) between the said projecting position and an inserted position in which the projection (3) is in contact with the said second blade (2), **characterized in that** each contact blade (1, 2) is a blade bent over so as to have two branches (4, 5, 8, 9) lying opposite one another and **in that** the casing is designed to keep the said branches (4, 5, 8, 9) compressed between walls of the said casing (13, 14).

2. Detector according to Claim 1, **characterized in that** each blade (1, 2) has a first branch (8, 9) lying in one plane and a second branch (4, 5) sprung back so as to be at a distance from the said first branch that is less than the distance separating the walls of the casing (13, 14) that are keeping the said branches (4, 5, 8, 9) compressed.

3. Detector according to either of Claims 1 and 2, **characterized in that** the extension (3) consists of an incurvate tab, the convex face of the said tab being placed so as to face the second blade (2).

4. Detector according to one of Claims 1 to 3, **characterized in that** the second blade includes an incurvate second branch (5) having a portion adjacent to the first branch (9) of the second blade, this portion being placed so as to be at a distance from the said first branch (9) of the second blade that is greater than the distance separating the end (5a) of the second branch (5) from the first branch (9) of the second blade.

5. Detector according to one of Claims 1 to 4, **characterized in that** each blade (1, 2) is housed in a separate casing (13, 14).

6. Detector according to Claim 2, **characterized in that** each first branch (8, 9) includes teeth (6) that lie in the plane of the said first branches (8, 9) and are designed to engage with walls of the casing (13, 14).

7. Detector according to one of Claims 1 to 6, **characterized in that** at least one stop (7a, 7b) is placed so as to project from the said face (13a) of the casing (13, 14), directly downstream of the extension (3) of the first blade (1).

8. Detector according to Claim 7, **characterized in that** stops (7a, 7b) are placed on each side of the said extension (3).

9. Connector for a flat support, such as an electronic card, comprising contactors (11) lying in one plane and designed to come into contact with the flat support (12) inserted in a direction F, **characterized in that** the connector includes a detector according to one of Claims 1 to 8, placed downstream of the contactors (11) with respect to the said direction F.
